# FASCICULE DE BREVET EUROPEEN

(11) **EP 0 720 706 B1**
(45) Date de publication et mention de la délivrance du brevet: **04.03.1998**
(21) Numéro de dépôt: 94923763.0
(22) Date de dépôt: 28.07.1994
(51) Int. Cl.: F16G 3/04

(54) **DISPOSITIF DE JONCTIONNEMENT POUR BANDE TRANSPORTEUSE**
VERBINDUNGDVORRICHTUNG FÜR FÖRDERGUT
CONVEYOR BELT JOINTING DEVICE

(43) Date de publication de la demande: 10.07.1996
(73) Titulaire: Aser, F-42405 Saint-Chamond (FR)
(72) Inventeur: JAKOB, Horst, F-30360 Deaux (FR)
(74) Mandataire: Simonnot, Bernard
(86) Numéro de dépôt international: FR9400960
(87) Numéro de publication internationale: WO9603597

(56) Documents cités:
- EP-A- 0 477 469
- DE-A- 1 952 528
- DE-A- 2 708 489
- FR-A- 1 313 652
- FR-A- 2 022 930
- FR-A- 2 701 300

## Description

Les bandes transporteuses sont utilisées dans les mines, les carrières et dans différentes industries. Elles comportent des jonctions connues, réalisées soit en collant les deux extrémités de la bande, par exemple par vulcanisation, soit en munissant le bord de chacune des extrémités de la bande, d'une rangée d'agrafes en forme générale de U, disposées côte à côte, la partie courbe de ces agrafes dépassant vers l'extérieur au-delà du bord de la bande sur lequel sont posées les agrafes, la dimension de cette partie dépassante étant dans le sens transversal de la bande transporteuse approximativement de la moitié de la dimension des deux pattes de l'agrafe placées respectivement sur le dessus et sur le dessous de l'extrémité de la bande transporteuse. Des espaces vides se trouvent ainsi créés, dans le sens transversal de la bande, entre les parties courbes dépassantes, bien que les pattes des agrafes, soient, elles disposées côte à côte.

Ces espaces vides sont destinés à être occupés par les parties dépassantes des parties courbes dépassantes des agrafes de la rangée d'agrafes fixées sur l'autre extrémité de la bande transporteuse, lorsque l'on rapproche les extrémités afin de réaliser la jonction.

La fixation des agrafes sur l'extrémité de la bande transporteuse s'effectue de façon connue au moyen de pointes simples ou doubles que l'on fait passer à partir de l'un des côtés de la bande transporteuse dans des trous pratiqués à cet effet dans une des pattes de chaque agrafe, puis, en piquant dans la bande transporteuse, à travers celle-ci, et enfin dans des trous pratiqués dans l'autre patte de chaque agrafe, en alignement avec le trou correspondant de l'autre patte, la partie des pointes qui dépasse étant ensuite rabattue dans des sillons longitudinaux de la patte d'où elle fait saillie, ceci afin de ne pas former de surépaisseur au-dessus du niveau de la surface extérieure de la patte.

Les parties concaves des pattes de l'une et de l'autre rangée de pattes forment ainsi une suite d'yeux imbriqués les uns à côté des autres dans lesquels une tige de liaison et d'articulation peut être enfilée à partir de l'un des côtés de la bande transporteuse.

La tige de liaison et d'articulation étant enfilée, l'ensemble ainsi réalisé constitue une sorte de charnière souple qui relie les deux extrémités de la bande transporteuse de façon articulée.

La bande peut alors être mise sous la tension mécanique de fonctionnement convenable, par exemple en écartant les rouleaux de renvoi l'un de l'autre. Dans cette situation de tension mécanique seules les parties concaves avant des agrafes portent sur la tige de liaison et d'articulation, sur environ 180°. Ces parties concaves ont avantageusement la forme d'un demi-cercle, de manière à porter uniformément sur la tige de liaison et d'articulation, de section ronde.

Lors du fonctionnement les agrafes sont soumises à diverses contraintes. La contrainte la plus évidente est celle de l'usure des parties concaves avant des agrafes par frottement sur la tige de liaison et d'articulation sur laquelle elles portent.

Cette contrainte est la plupart du temps aggravée par la présence de particules abrasives provenant du matériau transporté (charbon, minerai, sable). Du fait que l'ensemble formé par les agrafes laisse exister des vides, principalement entre la partie convexe avant des agrafes et le bord opposé de la bande transporteuse, ces particules passent par ces vides et se répandent sous la bande transporteuse.

Une autre contrainte consiste dans la traction qui s'exerce sur les pattes des agrafes, laquelle traction se reporte sur les pointes de fixation, et par celle-ci sur la bande transporteuse, avec tendance à provoquer une déchirure de celle-ci. Cette traction peut conduire à un déplacement d'au moins certaines des pattes par rapport à l'extrémité de la bande transporteuse, dans le sens longitudinal de la bande transporteuse. Ce déplacement peut être inégal entre les agrafes, certaines se déplaçant plus que d'autres. Il en résulte un désalignement des yeux, ce qui a pour conséquence que certaines parties concaves des agrafes portent sur la ligne de liaison et d'articulation avec une force moindre pour certaines agrafes, et même ne portent plus du tout, ce qui a pour effet, à l'inverse, qu'il se produit une augmentation de la force supportée par les agrafes qui se sont moins déplacées. On comprend aisément que ceci est préjudiciable à la longévité de la jonction.

Un autre problème qui existe avec les agrafes conventionnelles est celui de l'absence d'étanchéité de la jonction. Sans aller jusqu'à une étanchéité absolue il est souhaitable de limiter au maximum le passage des particules du matériau transporté dans les vides laissés entre les agrafes et la bande transporteuse, car l'accumulation de ces particules qui, on l'a vu plus haut, contribuent à l'usure de la jonction, a également de graves conséquences sur la bande transporteuse elle-même, dont la face interne transporte les particules sur les rouleaux de renvoi qui s'encrassent et qui deviennent ainsi des facteurs d'usure de la bande transporteuse. Une autre conséquence, encore plus grave de ce passage de particules du matériau transporté d'un côté à l'autre de la jonction, et de là sur la partie interne de la bandé transporteuse ainsi que sur les rouleaux, est, dans le cas du poussier de charbon, le risque d'inflammation par frottement entre la bande transporteuse et la surface des rouleaux et par conséquent le risque de coup de grisou en cas de présence de ce gaz dangereux.

Des solutions ont été proposées à certains de ces problèmes. Par exemple en ce qui concerne l'usure par frottement des parties concaves des agrafes sur la tige de liaison et d'articulation, on a proposé dans un brevet DE-A-1 952 528 d'épaissir localement le métal du flan dans lequel sont découpées les agrafes, par fluage du métal entre ces parties épaissies, cette opération ayant également pour effet d'écrouir le métal et de le rendre plus résistant à l'usure. Dans un autre brevet DE-A-2 708 489, on a proposé de plier en forme de U, ou de V le métal du flan dans lequel sont découpées les agrafes de façon telle que le profil de la partie courbe des agrafes ait une largeur d'environ la moitié de celle des pattes de fixation de l'agrafe, ce profil en U ou en V, ouvert soit vers l'intérieur, soit vers l'extérieur, étant censé être plus résistant à l'usure que les parties concaves des pattes conventionnelles.

En ce qui concerne le problème de l'étanchéité relative de la jonction on a proposé jusqu'ici dans l'état de la technique des solutions faisant appel à des corps pleins de remplissage constitués par des matériaux élastiques tels que la mousse de caoutchouc, ou la mousse de résines de synthèse, par exemple la mousse de polyuréthane, censés rendre la jonction étanche durablement. Cependant ces solutions sont insuffisantes car les contraintes d'exploitation sont telles que ces corps pleins sont trop rapidement détériorés. De plus, ces matériaux ont tendance à fluer vers les espaces vides des yeux au moment de la fixation des agrafes sur les bandes transporteuses en empêchant le libre passage de la tige de liaison et d'articulation lors de l'enfilage de celle-ci. Dans ce qui suit, on considère, dans le but de rendre claire la description que l'arrière des agrafes est la partie comportant les pattes de fixation, l'avant des agrafes étant la partie courbe convexe à l'extérieur et concave à l'intérieur des agrafes. D'une façon plus générale l'arrière sera la direction correspondant à l'arrière des agrafes tel qu'il vient d'être défini et l'avant la direction correspondant à l'avant des agrafes tel qu'il vient d'être défini. Le haut et le bas seront considérés par rapport à la partie supérieure de la bande transporteuse, c'est-à-dire celle recevant le matériau à transporter.

La présente invention a pour objet de créer un dispositif de jonctionnement pour bande transporteuse constitué par deux rangées d'agrafes en forme générale de U, fixées sur le bord de chacune des extrémités d'une bande transporteuse au moyen de pointes simples ou doubles ou de rivets, la partie courbe des agrafes en forme de U débordant au-delà des bords constituant les extrémités de la bande transporteuse les parties concaves des agrafes en forme de U formant une succession d'yeux délimités par lesdites parties concaves des agrafes et par le bord de l'extrémité de la bande transporteuse à laquelle sont fixées les agrafes, les agrafes de chacune des rangées étant placées entre les agrafes de l'autre rangée, de façon telle que les yeux des agrafes des deux rangées soient en alignement dans le sens tranversal de la bande, une tige de liaison et d'articulation étant enfilée dans ces yeux en alignement, ce dispositif de jonctionnement ne présentant pas les inconvénients, décrits plus haut, inhérents aux dispositifs connus, en ce qui concerne l'usure des agrafes et en ce qui concerne plus généralement la longévité des jonctions. L'invention a également pour objet d'améliorer l'étanchéité du dispositif de jonctionnement aux particules du matériau transporté par la bande transporteuse, ainsi que de procurer une butée pour un positionnement correct des agrafes lors de leur montage sur la bande transporteuse.

Le problème est résolu selon l'invention grâce au fait qu'un anneau est fixé dans la partie concave de chacune des agrafes en forme de U, la tige de liaison et d'articulation étant enfilée dans lesdits anneaux successifs appartenant alternativement à l'une et à l'autre rangée d'agrafes. L'anneau n'a généralement pas une forme ronde. En effet comme on le verra plus loin, il est nécessaire de disposer d'un certain jeu pour l'enfilage de la tige de liaison et d'articulation, et l'alignement parfait qu'exigerait une forme ronde est difficilement compatible avec les conditions d'exploitation.

L'anneau a donc avantageusement une forme ovale, ou en "hippodrome" c'est-à-dire que son contour comporte une partie en forme de demi-cercle du côté où il est logé dans la partie concave des agrafes, une partie similaire à l'opposé, c'est-à-dire du côté orienté vers le bord de la bande transporteuse lorsque l'agrafe est fixée sur celle-ci, et entre ces deux parties en forme de demi-cercle deux sections reliant respectivement les extrémités des parties en forme de demi-cercle, ces sections formant des lignes droites ou courbes légèrement concaves.

La partie concave des agrafes a un profil complémentaire de celui de la périphérie extérieure de l'anneau.

Le profil de la périphérie extérieure de l'anneau peut revêtir diverses formes aptes à assurer une bonne assise de l'anneau dans la concavité de l'agrafe. Plusieurs variantes sont proposées dans les formes de réalisation préférées exposées plus loin.

L'anneau n'est pas nécessairement fermé, il peut s'agir d'un anneau brisé, ou encore d'un anneau brisé dont les extrémités se chevauchent, comme on le verra lors de l'exposé concernant une forme de réalisation préférée, ces extrémités qui se chevauchent pouvant servir à la fixation d'un organe d'étanchéité, la partie de l'anneau portant, lors du fonctionnement, sur la tige de liaison et d'articulation, formant un demi-cercle, comme dans le cas d'un anneau fermé, ou d'un anneau brisé, l'extrémité située le plus en arrière venant en outre avantageusement en butée contre la partie frontale de l'extrémité de la bande transporteuse. Les anneaux peuvent également être réalisés sous forme d'une suite d'anneaux non complètement fermés reliés entre eux par des parties de liaison obliques par rapport au plan médian de la suite d'anneaux passant par la plus grande dimension intérieure des anneaux, en constituant une sorte d'hélice dont le pas est nul au niveau de chaque anneau non complètement fermé, les parties obliques de liaison permettant de progresser jusqu'à l'anneau non complètement fermé suivant, l'écart entre les anneaux successifs correspondant à l'écart prévu pour le montage des agrafes sur la bande transporteuse, ou sous forme d'une suite d'anneaux non complètement fermés reliés entre eux par des parties de liaison généralement parallèles au plan médian de la suite d'anneaux passant par la plus grande dimension des anneaux, en constituant une sorte de méandre, le sens d'enroulement des anneaux non complètement fermés étant inversé pour chaque anneau de la suite d'anneaux par rapport au sens d'enroulement de l'anneau précédent, les parties de liaison généralement parallèles au plan médian longitudinal de la suite d'anneaux étant situées alternativement plus près du centre de l'anneau, puis plus loin, la partie reliant une des extrémités d'un anneau à la partie de liaison généralement parallèle au plan médian longitudinal et la partie reliant l'autre extrémité dudit anneau à l'autre partie de liaison généralement parallèle au plan médian longitudinal, se chevauchant sur une certaine distance et étant très proches l'une de l'autre.

La fixation des anneaux dans les parties courbes concaves des agrafes peut être assurée de diverses façons. Dans le cas où l'anneau est logé dans une partie concave de l'agrafe présentant deux bords relevés orientés vers l'intérieur de la concavité, l'anneau peut être pincé entre ces deux bords relevés. Dans le cas où la partie concave de l'agrafe ne présente pas ces deux bords relevés orientés vers l'intérieur de la concavité, l'anneau peut être fixé par soudure dans la concavité de l'agrafe. Une telle soudure peut d'ailleurs être réalisée en complément dans le cas où l'anneau est déjà fixé par pincement entre deux bords relevés de la partie concave de l'agrafe. Enfin la partie concave de l'agrafe peut s'étendre sur un angle supérieur à 180°, l'anneau présentant une forme mâle complémentaire ce qui permet un encliquetage de l'anneau dans ladite concavité, lequel encliquetage se renforce lors de la fixation définitive de l'agrafe sur la bande transporteuse.

Selon l'invention les anneaux sont avantageusement réalisés en un matériau sensiblement plus résistant à l'usure due au frottement que celui au moyen duquel sont réalisées les agrafes. Le matériau choisi peut également présenter de meilleures propriétés de glissement que celui dont sont constituées les agrafes. Ceci permet d'améliorer la longévité et l'efficacité des jonctions tout en procurant des économies de matière appréciable puisque l'on peut choisir pour les agrafes un matériau moins noble.

Pour assurer l'étanchéité de la jonction, en particulier en ce qui concerne l'espace vide qui existe entre la partie convexe des agrafes et le bord de l'extrémité opposée de la bande transporteuse, l'invention prévoit la réalisation d'une bande d'étanchéité qui est fixée sur les parties des anneaux situées à l'opposé de la partie concave des agrafes d'une même rangée, appelée plus loin partie arrière des anneaux. Cette bande d'étanchéité sert ainsi également à la manutention des agrafes et à leur présentation à l'écartement convenable pour leur fixation sur la bande transporteuse. Les bandes d'étanchéité selon l'invention comportent une partie oblongue réalisée dans un matériau, de préférence résilient, plat, tel qu'une tôle métallique ou une feuille de matière plastique, par découpe et formage dans le premier cas, et par thermo-formage et découpe dans le second cas, et son profil correspond généralement à la courbure de la partie arrière de l'anneau sur laquelle elle doit être fixée. Selon le mode de fixation la partie oblongue de la bande d'étanchéité peut comporter, ou non, des décrochements permettant cette fixation, de tels décrochements étant nécessaires, par exemple dans le cas où les anneaux sont du type brisé à extrémités chevauchantes, ou du type méandre, comme décrits plus haut.

A cette partie oblongue se rattachent, en formant une seule pièce avec elle, des lamelles d'étanchéité dont la surface et l'écartement correspondent respectivement à la surface et à l'écartement des parties supérieures et des parties inférieures des espaces vides qui existent entre la partie convexe des agrafes d'une rangée et l'extrémité opposée de la bande transporteuse et entre les agrafes de l'autre rangée fixées sur ladite extrémité opposée, lorsque la jonction est réalisée.

Ces lamelles peuvent se présenter sous forme d'une seule rangée, dans ce cas elles se situent du côté de la bande d'étanchéité, qui, à l'état monté est orienté vers l'extérieur de la bande transporteuse, mais de façon préférée, pour une meilleure efficacité, on les réalise sous forme de deux rangées symétriques par rapport au plan de symétrie longitudinal partageant la partie oblongue de la bande d'étanchéité. Cette symétrie permet également d'éviter des erreurs au montage des agrafes sur la bande transporteuse.

La jonction étant réalisée, la surface extérieure des lamelles d'étanchéité affleure la surface extérieure des parties étroites des agrafes débordant au-delà de l'extrémité de la bande transporteuse, ainsi que la partie convexe de l'agrafe de la rangée opposée correspondant à chaque lamelle. La partie oblongue de la bande d'étanchéité vient en appui contre la partie frontale de l'extrémité de la bande transporteuse.

Les espaces vides se trouvent ainsi occultés à une de leurs extrémités, lorsque l'on réalise une seule rangée de lamelles formant une seule pièce avec la partie oblongue de la bande d'étanchéité, et à chacune de leurs extrémités lorsque, pour un meilleur résultat, on préfère réaliser deux rangées de lamelles, symétriques par rapport au plan de symétrie horizontal partageant la partie oblongue de la bande d'étanchéité. Ainsi à l'état monté, les lamelles forment une double barrière d'étanchéité, en occultant les espaces vides décrits plus haut, aussi bien à leur extrémité supérieure, qu'à leur extrémité inférieure.

Des moyens d'étanchéité supplémentaires apparaîtront dans la description détaillée de formes de réalisation préférées.

En ce qui concerne le mode de fixation des bande d'étanchéité, l'invention prévoit plusieurs possibilités. Sous sa forme la plus simple, la bande d'étanchéité est soudée par points contre la face extérieure de la partie arrière des anneaux. Selon une autre forme de réalisation la bande d'étanchéité est soudée par points contre la face intérieure de la partie arrière des anneaux. Cette forme de réalisation entraîne deux obligations. D'une part il faut comprimer momentanément les lamelles de la rangée supérieure et celles de la rangée inférieure respectivement en direction les unes des autres pour pouvoir passer la bande d'étanchéité à l'intérieur des anneaux. Du fait de la résilience du matériau, choisi, (métal ou matière plastique), les lamelles étant ensuite relâchées, reviennent alors à leur position initiale et la soudure peut être effectuée. D'autre part du fait que la partie oblongue de la bande d'étanchéité est en retrait à l'intérieur des anneaux il faut donner aux lamelles une forme telle que, grâce à une partie renflée orientée, à l'état monté, vers la partie frontale de l'extrémité de la bande transporteuse les lamelles assurent elles-mêmes l'étanchéité du côté de ladite partie frontale de la bande transporteuse. Les bandes d'étanchéité peuvent également être fixées à la partie arrière des anneaux, en étant insérées, et pincées entre les parties chevauchantes des anneaux brisés ou celles des anneaux reliés entre eux, du type méandre. Cette fixation peut être complétée par une soudure par points.

Dans le cas des anneaux du type hélice la fixation peut être effectuée par soudure de la partie oblongue de la bande d'étanchéité contre la face arrière de la partie de liaison oblique reliant les anneaux successifs, au droit des paires de lamelles supérieures et inférieures.

En ce qui concerne le problème du glissement des pattes des agrafes on a remarqué que, selon l'état de la technique, les pattes étant fortement serrées contre la bande transporteuse au moment de leur fixation au moyen de pointes simples ou doubles, il se produisait un certain enfoncement des pattes, accompagné d'un certain fluage de la matière des bandes transporteuse. En particulier, aux sillons formés du côté extérieur des pattes des agrafes, et destinés à loger pour l'une des pattes les têtes des pointes, et pour l'autre des pattes les extrémités rabattues des pointes, correspondent, du côté intérieur des pattes, des reliefs de même forme. Ces reliefs s'impriment dans la matière de la bande transporteuse et contribuent dans une certaine mesure à une meilleure tenue de l'agrafe sur la bande transporteuse. Cependant, ces reliefs dont l'existence est due aux sillons destinés de l'autre côté au logement des extrémités rabattues des pointes se présentent, dans l'état de la technique, dans le sens longitudinal de la bande transporteuse. Cette disposition dans le sens longitudinal n'est pas optimum pour l'accrochage des agrafes sur les bandes transporteuses.

C'est pourquoi l'invention prévoit, dans ce but, et de ce fait dans celui d'une meilleure résistance à l'usure des jonctions et d'une meilleure longévité de celles-ci, de prolonger les sillons, et les reliefs correspondants, sur la patte qui reçoit les têtes des pointes simple ou double, par des sillons et des reliefs correspondants formant, vus en plan, des angles avec les sillons de base, et se croisant entre eux. Ces reliefs disposés dans une direction non longitudinale assurent un meilleur ancrage de la patte correspondante et, de ce fait, de l'agrafe.

Il faut également remarquer qu'une fonction supplémentaire des anneaux réside dans le fait que lors de la mise en place des agrafes à cheval sur l'extrémité de la bande transporteuse ceux-ci viennent en butée contre la partie frontale de ladite extrémité, en facilitant de ce fait le positionnement correct des agrafes. Dans le cas où la partie oblongue de la bande d'étanchéité est soudée sur l'arrière des anneaux c'est cette partie oblongue qui vient en butée contre la partie frontale de l'extrémité de la bande transporteuse.

L'invention est décrite avec plus de détails en relation avec des formes de réalisations préférées et en référence au dessin dans lequel
la figure 1 représente une agrafe selon une première forme de réalisation de l'invention, vue en perspective, ainsi que les deux pointes doubles destinées à son montage sur une bande transporteuse,
la figure 2 représente une vue fragmentaire, partiellement en coupe, selon une autre perspective, de la même agrafe que celle de la figure 1,
la figure 3 représente, en perspective, un fragment de bande d'étanchéité montée sur un anneau brisé identique à celui de l'agrafe selon la figure 1,
la figure 4 représente en coupe longitudinale deux agrafes selon la figure 1, dont une, à gauche sur la figure, est fixée sur une extrémité de la bande transporteuse, l'autre, à droite sur la figure, étant seulement présentée,
la figure 5 est une vue en plan par le dessus d'une jonction identique à celle de la figure 4, les agrafes étant fixées sur la bande transporteuse,
les figures 6 et 7 représentent schématiquement des étapes de la fabrication de l'agrafe selon la figure 1,
les figures 8 et 9 représentent des coupes transversales de l'agrafe selon la figure 1, respectivement selon les plans de coupe A-A et B-B de la figure 7,
la figure 10 représente en plan une étape initiale de la fabrication des bandes d'étanchéité,
la figure 11 représente en perspective une bande d'étanchéité terminée, de façon fragmentaire,
la figure 12 représente en perspective une autre forme de réalisaticn de l'agrafe selon l'invention,
la figure 13 représente une étape de la fabrication des agrafes selon la figure 12,
les figures 14 et 15 représentent respectivement des coupes transversales de l'agrafe selon les plans de coupe C et D de la figure 13,
la figure 16 représente en perspective une autre forme de réalisation des anneaux et de la bande d'étanchéité,
la figure 17 représente en perspective encore une autre forme de réalisation des anneaux et de la bande d'étanchéité,
la figure 18 représente en perspective des anneaux reliés entre eux du type méandre,
la figure 19 représente en perspective des anneaux reliés entre eux du type hélice munis partiellement d'une bande d'étanchéité,

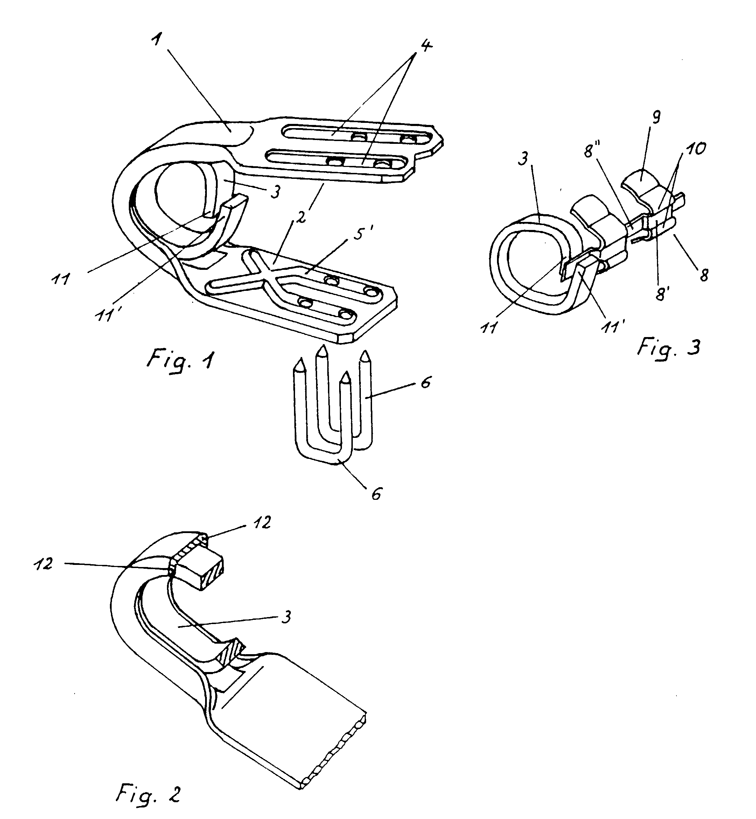

Sur la figure 1 l'agrafe 1 comporte des pattes de fixation 2 sa partie courbe concave avant recevant un anneau brisé 3 dont les extrémités 11, 11' se chevauchent. Les pattes de fixation comportent sur leurs faces extérieures des sillons longitudinaux 4 et respectivement 5 (non visibles), auxquels correspondent sur les faces opposées des reliefs longitudinaux 4' (non visibles) et 5'. Des pointes doubles 6, 6 sont destinées à la fixation ultérieure des agrafes, en passant par les trous présents dans les sillons 4, 5 et les reliefs 4', 5'.

La figure 2 montre comment l'anneau 3 est pincé par les rebords 12, 12 orientés vers la concavité de la partie courbe de l'agrafe.

La figure 3 montre la fixation d'une bande d'étanchéité 8, représentée de façon fragmentaire. La bande d'étanchéité comporte une partie oblongue 8' munie de décrochements 8" et de lamelles d'étanchéité 9 qui se rattachent à la partie oblongue 8' par des parties 10, 10 renflées en direction de l'arrière. Comme le montre la figure 3, le décrochement 8" est pincé entre les extrémités chevauchantes 11, 11' d'un anneau 3.

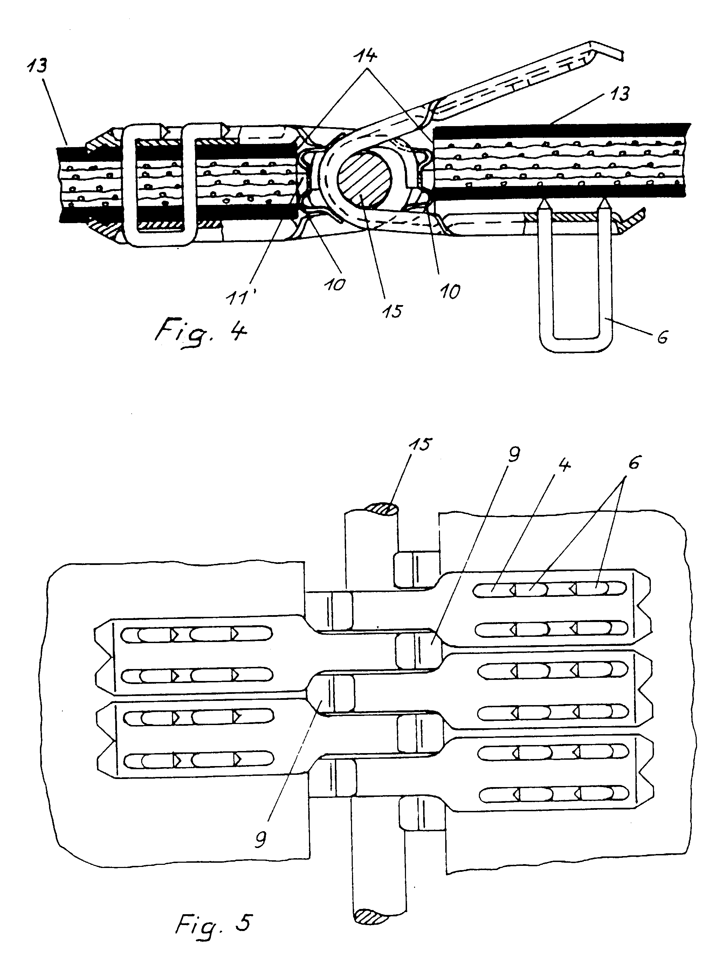

La figure 4 montre à gauche une agrafe 1 fixée sur l'extrémité d'une bande transporteuse. On remarque que l'extrémité 11' de l'anneau est en butée contre la partie frontale 14 de l'extrémité de la bande transporteuse. Les parties renflées 10, 10 de la bande d'étanchéité sont également en contact avec la partie frontale de l'extrémité de la bande transporteuse 13. Une tige de liaison et d'articulation 15 est enfilée dans les anneaux. Sur la partie gauche de la figure l'autre agrafe est représentée encore non fixée ; on remarque une pointe double 6 qui est enfilée dans les trous de la patte inférieure de l'agrafe, la patte supérieure de l'agrafe n'étant pas encore rabattue.

Sur la figure 5 on voit en plan par le dessus deux agrafes à gauche et trois agrafes à droite reliées par la tige de liaison et d'articulation 15, les lamelles 9 en butée contre l'extrémité frontale de la bande transporteuse et rejoignant la partie courbe de l'agrafe voisine, les extrémités des pointes doubles 6 sont rabattues dans les sillons 4.

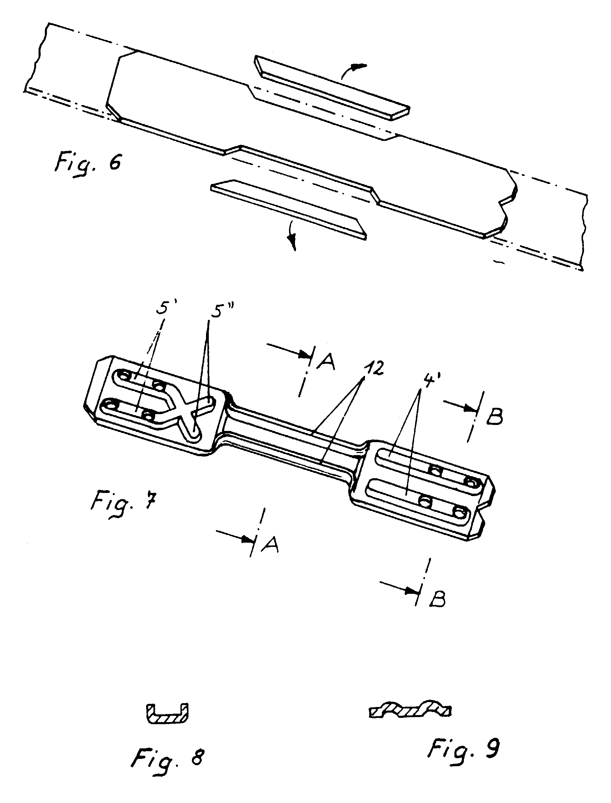

Sur la figure 6 on voit l'agrafe découpée à plat dans un feuillard métallique et sur la figure 7 l'agrafe toujours à plat, dans laquelle ont été formés les reliefs 4' et 5', découpés les trous, et redressés les rebords 12. Dans une étape ultérieure, non représentée, l'agrafe est courbée pour prendre sa forme de U.

La figure 8 montre la coupe transversale de la partie étroite de l'agrafe selon le plan de coupe A-A de la figure 7, la figure 9 montrant la coupe transversale de la patte de droite de la figure 7, selon le plan de coupe B-B de la figure 7.

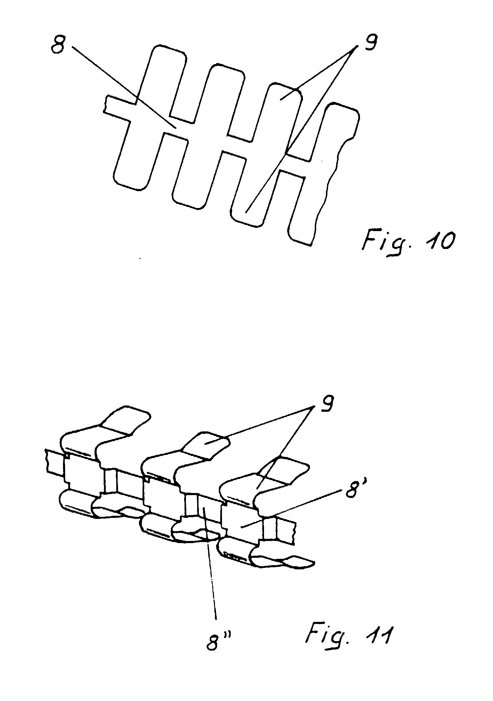

La figure 10 montre le stade initial de la fabrication des bandes d'étanchéité à partir d'un feuillard de métal résilient, par découpe. On remarque les futures lamelles 9 et la partie oblongue 8.

Sur la figure 11, les lamelles 9 ont reçu leur forme définitive et la partie oblongue 8' a été déformée entre les lamelles successives pour réaliser les décrochements 8".

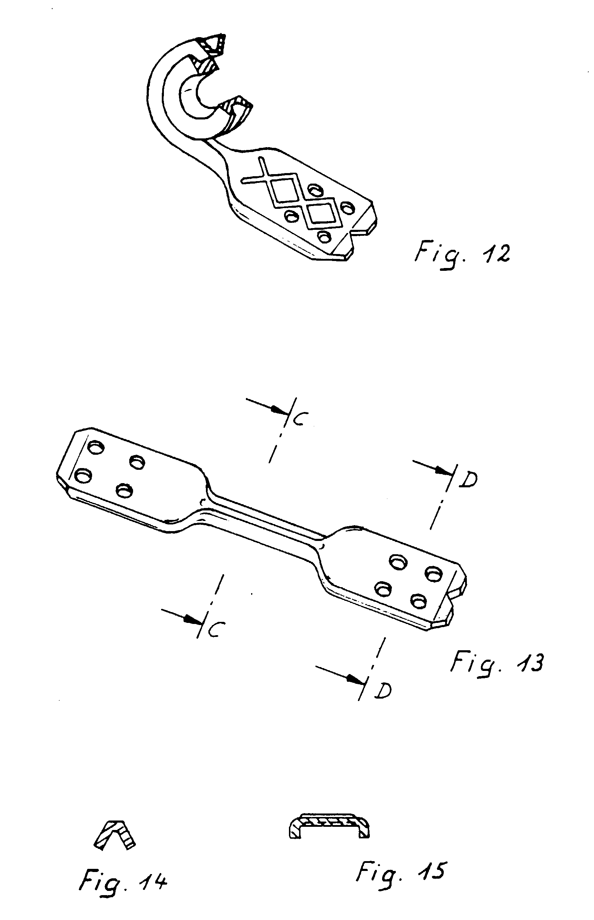

Sur la figure 12 on remarque, grâce à la partie en coupe, que l'agrafe a dans sa partie étroite courbe un profil en V qui vient se loger dans une rainure de forme complémentaire ménagée dans la périphérie extérieure de l'anneau.

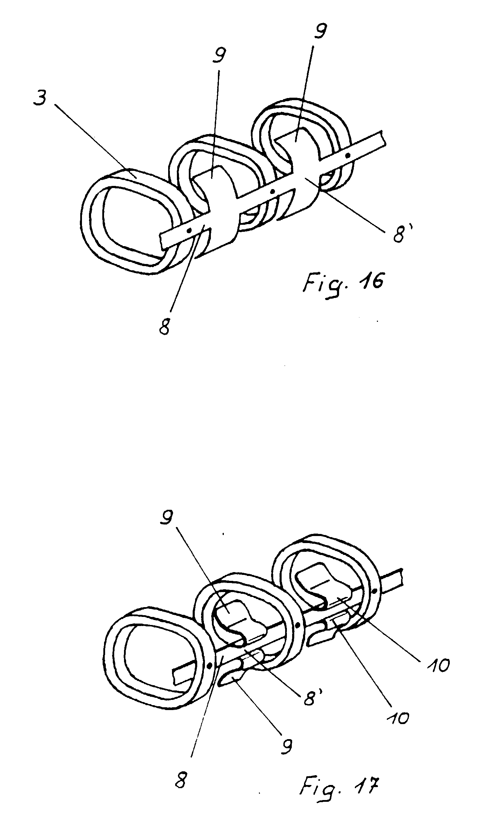

La figure 13 représente la même agrafe que celle de la figure 12, à un stade intermédiaire de sa fabrication.

Les figures 14 et 15 représentent respectivement la coupe transversale selon le plan de coupe C-C de la figure 13 et la coupe transversale selon le plan de coupe D-D de la figure 13. On remarque le profil en V de la partie étroite de l'agrafe, les sillons et reliefs n'étant pas encore réalisés.

Sur la figure 16 est représentée une forme de réalisation particulière de l'invention dans laquelle la bande d'étanchéité 8 ne comporte pas de décrochements 8", et dans laquelle les lamelles 9 n'ont pas de parties renflées vers l'arrière dans la zone où elles se raccordent à la partie oblongue 8'. Ceci est dû au mode de fixation par soudure sur les parties'arrière des anneaux 3, ici des anneaux fermés. Dans ce cas c'est la partie oblongue 8' de la bande d'étanchéité 8 qui est en butée sur toute sa longueur avec la partie frontale 14 de l'extrémité de la bande transporteuse.

Sur la figure 17 est représentée encore une autre forme de réalisation particulière de l'invention. La bande d'étanchéité 8 comporte une partie oblongue 8', qui n'est pas munie de décrochements et qui porte des paires de lamelles 9 qui se rattachent à la partie oblongue 8' par des parties 10, 10 renflées vers l'arrière des agrafes. On comprend qu'avec cette forme de réalisation ce sont les anneaux, ici des anneaux fermés, et les parties renflées 10, 10 des lamelles qui sont en butée contre la partie frontale de l'extrémité de la bande transporteuse, lorsque l'agrafe est fixée sur ladite extrémité. La fixation de la bande d'étanchéité est dans ce cas assurée par soudure de la partie oblongue 8' contre l'intérieur de la partie arrière des anneaux 3.

La figure 18 montre une forme particulière de réalisation des anneaux brisés, reliés entre eux par des parties de liaison 16 et 16' généralement parallèles au plan médian de la suite d'anneau 3 passant par la plus grande dimension des anneaux 3.

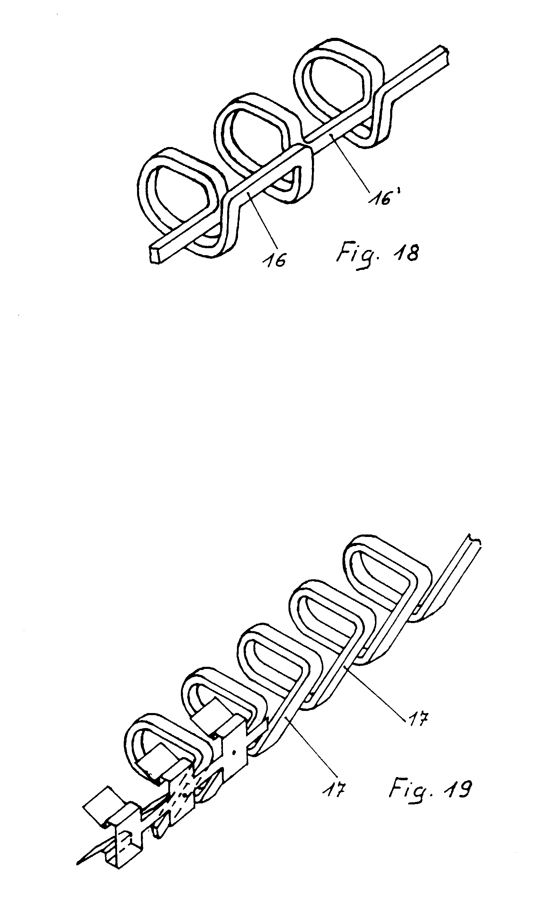

La figure 19 représente des anneaux reliés entre eux par des parties de liaison obliques 17, la fixation de la bande d'étanchéité intervenant par soudure contre la face arrière des parties de liaison obliques 17.

Il faut noter que pour permettre une meilleure visualisation les anneaux ont été représentés dans certaines vues avec un écart entre eux supérieur à la réalité. La figure 5 permet de voir clairement la disposition et l'écartement des agrafes, dans la réalité, et par conséquent d'imaginer la disposition et l'écartement des anneaux, non visibles, qu'elles comportent.

## Revendications

1. Dispositif de jonctionnement pour bande transporteuse constitué par deux rangées d'agrafes en forme générale de U, fixées sur le bord de chacune des extrémités de la bande transporteuse (13) au moyen de pointes simples ou doubles ou de rivets, la partie courbe des agrafes (1) en forme de U débordant au-delà des bords constituant les extrémités de la bande transporteuse, les parties concaves des agrafes (1) en forme de U formant une succession d'yeux délimités par lesdites parties concaves des agrafes et par le bord de l'extrémité de la bande transporteuse à laquelle sont fixées les agrafes, les agrafes de chacune des rangées étant placées entre les agrafes de l'autre rangée, de façon telle que les yeux des agrafes des deux rangées soient en alignement, dans le sens transversal de la bande, une tige métallique (15) formant axe de liaison et d'articulation étant enfilée dans ces yeux en alignement, caractérisé par le fait qu'un anneau (3) est fixé dans la partie concave de chacune des agrafes en forme de U, la tige métallique (15) formant axe de liaison et d'articulation étant enfilée dans lesdits anneaux successifs appartenant alternativement à l'une et à l'autre rangée d'agrafes (1).

2. Dispositif de jonctionnement selon la revendication 1, caractérisé par le fait que la partie concave de l'agrafe (1) a un profil complémentaire de celui de la périphérie extérieure de l'anneau (3).

3. Dispositif de jonctionnement selon les revendications 1 et 2, caractérisé par le fait que le profil de la périphérie de l'anneau (3) est plat, la partie concave de l'agrafe (1) en forme de U ayant un profil constitué par une partie médiane plate et par deux parties formant des bords relevés qui sont orientées vers l'intérieur de la concavité et qui encadrent l'anneau.

4. Dispositif de jonctionnement selon les revendications 1 et 2, caractérisé par le fait que le profil de la périphérie de l'anneau (3) comporte une ou plusieurs parties en creux dans le sens périphérique, la partie concave de l'agrafe (1) en forme de U ayant un profil comportant une ou plusieurs parties en relief dans le sens périphérique de forme complémentaire de celle des parties en creux de la périphérie de l'anneau.

5. Dispositif de jonctionnement selon les revendications 1 et 2, caractérisé par le fait que le profil de la périphérie de l'anneau (3) comporte, une ou plusieurs parties en relief, dans le sens périphérique, la partie concave de l'agrafe (1) en forme de U ayant un profil comportant, une ou plusieurs parties en creux, dans le sens périphérique, de forme complémentaire de celle des parties en relief de la périphérie de l'anneau (3).

6. Dispositif de jonctionnement selon l'une quelconque des revendications précédentes, caractérisé par le fait que l'anneau (3) est un anneau brisé.

7. Dispositif de jonctionnement selon l'une quelconque des revendications précédentes, caractérisé par le fait que l'anneau (3) est un anneau brisé, l'anneau brisé étant réalisé de façon telle que les extrémités de l'anneau brisé se chevauchent sur une certaine distance.

8. Dispositif de jonctionnement selon l'une quelconque des revendications précédentes, caractérisé par le fait que les anneaux (3) sont réalisés sous la forme d'une suite d'anneaux (3) non complètement fermés reliés entre eux par des parties de liaison obliques (17) par rapport au plan médian de la suite d'anneaux (3) passant par la plus grande dimension intérieure des anneaux, en constituant une sorte d'hélice dont le pas est nul au niveau de chaque anneau non complètement fermé, les parties obliques de liaison (17) permettant de progresser jusqu'à l'anneau (3) non complètement fermé suivant, l'écart entre les anneaux (3) successifs correspondant à l'écart prévu pour le montage des agrafes (1) sur la bande transporteuse.

9. Dispositif de jonctionnement selon l'une quelconque des revendications 1 à 7, caractérisé par le fait que les anneaux (3) sont réalisés sous la forme d'une suite d'anneaux (3) non complètement fermés reliés entre eux par des parties de liaison (16, 16') généralement parallèles au plan médian de la suite d'anneaux (3) passant par la plus grande dimension des anneaux (3), en constituant une sorte de méandre, le sens d'enroulement des anneaux (3) non complètement fermés étant inversé pour chaque anneau de la suite d'anneaux (3) par rapport au sens d'enroulement de l'anneau précédent, les parties de liaison généralement parallèles au plan médian longitudinal de la suite d'anneaux étant situées alternativement plus près du centre de l'anneau (3), puis plus loin, la partie reliant une des extrémités d'un anneau (3) à la partie de liaison (16) généralement parallèle au plan médian longitudinal et la partie reliant l'autre extrémité dudit anneau à l'autre partie de liaison (16) généralement parallèle au plan médian longitudinal, se chevauchant sur une certaine distance et étant très proches l'une de l'autre.

10. Dispositif de jonctionnement selon l'une des revendications précédentes, caractérisé par le fait que les anneaux (3) sont fixés en étant pincés dans la partie concave des agrafes (1), entre les bords relevés orientés vers l'intérieur de la concavité.

11. Dispositif de jonctionnement selon l'une quelconque des revendications précédentes, caractérisé par le fait que chaque anneau (3) est soudé en un ou plusieurs points à la partie courbe concave de l'agrafe (1) dans laquelle il est placé.

12. Dispositif de jonctionnement selon l'une quelconque des revendications précédentes, caractérisé par le fait que les anneaux (3) ont une forme allongée du fait qu'elle comporte un demi-cercle à l'avant et un demi-cercle à l'arrière, reliés à leurs extrémités supérieures et à leurs extrémités inférieures par des parties rectilignes ou par des parties courbes présentant une légère concavité en direction de l'intérieur des anneaux.

13. Dispositif de jonctionnement selon l'une quelconque des revendications précédentes, caractérisé par le fait que les anneaux (3) sont encliquetés dans la partie concave des agrafes (1), ladite partie concave des agrafes (1) ayant une forme s'étendant sur un peu plus que 180° et les anneaux (3) présentant une forme mâle correspondante autorisant la fixation ultérieure des agrafes (1) contre la bande transporteuse (13).

14. Dispositif de jonctionnement selon l'une quelconque des revendications précédentes, caractérisé par le fait que les propriétés de résistance à l'usure du matériau des anneaux (3) sont supérieures à celles du matériau constituant les agrafes (1) en forme de U.

15. Dispositif de jonctionnement selon l'une quelconque des revendications précédentes, caractérisé par le fait que les propriétés de glissement du matériau des anneaux (3) sont supérieures à celles du matériau constituant les agrafes (1) en forme de U.

16. Dispositif de jonctionnement selon l'une quelconque des revendications précédentes, caractérisé par le fait que les propriétés de résistance à l'usure et les propriétés de glissement du matériau des anneaux (3) sont supérieures à celles du matériau constituant les agrafes (1) en forme de U.

17. Dispositif de jonctionnement selon l'une quelconque des revendications précédentes, caractérisé par le fait qu'une bande d'étanchéité (8) est fixée aux parties arrières des anneaux (3), ladite bande d'étanchéité (8) comportant une partie oblongue (8') réalisée dans un matériau résilient plat, par découpe et formage ou par thermoformage et découpe, dont le profil correspond généralement à la courbure de la partie arrière de l'anneau (3) sur laquelle elle doit être fixée, ainsi que des lamelles d'étanchéité (9) rattachées à ladite partie oblongue (8') en formant une seule pièce avec elle, dont la surface et l'écartement correspondent respectivement à la surface et à l'écartement des parties supérieures et des parties inférieures des espaces vides qui existent entre la partie convexe des agrafes (1) d'une rangée et l'extrémité opposée de la bande transporteuse (13) et entre les agrafes (1) de l'autre rangée fixées sur ladite extrémité opposée, lorsque la jonction est réalisée, lesdites lamelles (9) étant disposées, par rapport à la partie oblongue (8'), à la façon des dents d'un râteau.

18. Dispositif de jonctionnement selon la revendication 17, caractérisé par le fait que les lamelles (9) se présentent sous forme d'une seule rangée, du côté de la bande d'étanchéité (8), qui à l'état monté, est orientée vers l'extérieur de la bande transporteuse (3).

19. Dispositif de jonctionnement selon la revendication 17, caractérisé par le fait que les lamelles (9) se présentent sous forme de deux rangées symétriques par rapport au plan de symétrie longitudinal partageant la partie oblongue (8') de la bande d'étanchéité (8).

20. Dispositif de jonctionnement selon la revendication 17, 18 ou 19, caractérisé par le fait que la partie oblongue (8') de la bande d'étanchéité présente une suite de décrochements (8") dont l'écartement mutuel correspond à celui des anneaux (3) lorsque les agrafes (1) sont montées sur l'extrémité de la bande transporteuse (13), lesdits décrochements étant orientés dans la même direction que les lamelles d'étanchéité (9) et ayant une amplitude qui correspond à l'épaisseur des anneaux (3), les lamelles d'étanchéité (9) étant dans ce cas rattachées à la partie oblongue (8') de la bande d'étanchéité (8) par une partie courbe qui fait saillie vers l'arrière, par rapport à la partie oblongue (8') de la bande d'étanchéité, d'au moins autant que l'épaisseur des anneaux.

21. Dispositif de jonctionnement selon la revendication 17, 18 ou 19, caractérisé par le fait que la bande d'étanchéité (8) est fixée aux anneaux (3) par une soudure effectuée contre la partie arrière des anneaux (3), les lamelles d'étanchéité (9) successives étant centrées entre les anneaux successifs.

22. Dispositif de jonctionnement selon la revendication 20, caractérisé par le fait que la bande d'étanchéité (8) est fixée aux anneaux brisés successifs (3), ses décrochements (8") successifs étant pincés entre les extrémités chevauchantes (11, 11') des anneaux successifs.

23. Dispositif de jonctionnement selon la revendication 22, caractérisé par le fait que les décrochements successifs de la bande d'étanchéité qui se trouvent pincés entre les extrémités chevauchantes (11, 11') des anneaux (3) successifs sont de plus soudés à celles-ci.

24. Dispositif de jonctionnement selon la revendication 20, caractérisé par le fait que la bande d'étanchéité (8) est fixée aux anneaux (3) successifs du type méandre reliés entre eux, les décrochements successifs (8") étant pincés entre les extrémités chevauchantes des parties de liaison successives.

25. Dispositif de jonctionnement selon la revendication 24, caractérisé par le fait que les décrochements successifs (8") de la bande d'étanchéité (8) qui se trouvent pincés entre les extrémités chevauchantes des parties de liaison (16, 16') successives d'anneaux reliés entre eux du type méandre sont de plus soudés à celles-ci.

26. Dispositif de jonctionnement selon la revendication 17, caractérisé par le fait que la bande d'étanchéité (8) est fixée par soudure de sa partie oblongue contre la face arrière de la partie de liaison oblique (17) reliant des anneaux successifs du type en hélice, au droit des paires de lamelles (9) supérieures et inférieures.

27. Dispositif de jonctionnement selon l'une quelconque des revendications précédentes, caractérisé par le fait qu'au moins une des pattes des agrafes (1) comporte sur sa surface inférieure orientée vers la bande transporteuse des reliefs (5") dont la direction générale, qu'ils soient rectilignes ou courbes, est oblique par rapport au sens longitudinal des pattes des agrafes et au sens longitudinal de la bande transporteuse lorsque les agrafes sont fixées sur celles-ci.

28. Dispositif de jonctionnement selon la revendication 27, caractérisé par le fait que les reliefs (5") sont constitués par des prolongements, qui se croisent, des reliefs (5') qui correspondent aux sillons longitudinaux dans lesquels sont logées les têtes des pointes de fixation.

29. Jonction réalisée au moyen d'un dispositif de jonctionnement selon l'une quelconque des revendications précédentes, caractérisée par le fait que les rangées d'agrafes (1) sont montées sur les extrémités de la bande transporteuse (13) de façon telle que la partie arrière des anneaux (3) de chaque rangée d'agrafes soit en butée contre la partie frontale (14) de l'extrémité de la bande transporteuse (13) sur laquelle elle est montée.

## Patentansprüche

1. Verbindungsvorrichtung für ein Förderband, die aus zwei Reihen von allgemein U-förmigen Klammern besteht, die am Rand jedes Endes des Förderbandes (13) mittels einfacher oder doppelter Stifte oder Nieten befestigt sind, wobei der gekrümmte Teil der U-förmigen Klammern (1) über die Ränder steht, die die Enden des Förderbandes bilden, wobei die konkaven Teile der U-förmigen Klammern (1) eine Abfolge von Ösen bilden, die durch die konkaven Teile der Klammern und den Rand des Endes des Förderbandes abgegrenzt sind, an dem die Klammern befestigt sind, wobei die Klammern jeder Reihe derart zwischen den Klammern der anderen Reihe angeordnet sind, daß die Ösen der Klammern der beiden Reihen in Querrichtung des Bandes ausgerichtet sind, wobei eine Metallstange (15), die eine Verbindungs- und Gelenkachse bildet, in diese ausgerichteten Ösen eingeführt ist, dadurch gekennzeichnet, daß ein Ring (3) im konkaven Teil jeder U-förmigen Klammer befestigt ist, wobei die Metallstange (15), die eine Verbindungs- und Gelenkachse bildet, in die aufeinanderfolgenden Ringe eingeführt ist, die jeweils abwechselnd zu der einen und der anderen Reihe von Klammern (1) gehören.

2. Verbindungsvorrichtung nach Anspruch 1, dadurch gekennzeichnet, daß der konkave Teil der Klammer (1) ein Profil aufweist, das komplementär zu demjenigen des Außenumfangs des Rings (3) ist.

3. Verbindungsvorrichtung nach den Ansprüchen 1 und 2, dadurch gekennzeichnet, daß das Profil des Umfangs des Rings (3) flach ist, wobei der konkave Teil der U-förmigen Klammer (1) ein Profil aufweist, das aus einem flachen Mittelteil und zwei Teilen gebildet ist, die hochgezogene Ränder bilden, ins Innere der Konkavität orientiert sind und den Ring umrahmen.

4. Verbindungsvorrichtung nach den Ansprüchen 1 und 2, dadurch gekennzeichnet, daß das Profil des Umfangs des Rings (3) einen oder mehrere hohle Teile in Umfangsrichtung aufweist, wobei der konkave Teil der U-förmigen Klammer (1) ein Profil besitzt, das in Umfangsrichtung einen oder mehrere erhabene Teile aufweist, deren Form zu derjenigen der hohlen Teile des Umfangs des Rings komplementär ist.

5. Verbindungsvorrichtung nach den Ansprüchen 1 und 2, dadurch gekennzeichnet, daß das Profil des Umfangs des Rings (3) einen oder mehrere erhabene Teile in Umfangsrichtung aufweist, wobei der konkave Teil der U-förmigen Klammer (1) ein Profil besitzt, das in Umfangsrichtung einen oder mehrere hohle Teile aufweist, deren Form zu derjenigen der erhabenen Teile des Umfangs des Rings komplementär ist.

6. Verbindungsvorrichtung nach einem der vorhergehenden Ansprüche, dadurch gekennzeichnet, daß der Ring (3) ein durchbrochener Ring ist.

7. Verbindungsvorrichtung nach einem der vorhergehenden Ansprüche, dadurch gekennzeichnet, daß der Ring (3) ein durchbrochener Ring ist, wobei der durchbrochene Ring derart realisiert ist, daß sich die Enden des durchbrochenen Rings über eine bestimmte Strecke überlappen.

8. Verbindungsvorrichtung nach einem der vorhergehenden Ansprüche, dadurch gekennzeichnet, daß die Ringe (3) in Form einer Abfolge von Ringen (3) gebildet sind, die nicht ganz geschlossen und miteinander durch bezüglich der Mittelebene der Abfolge von Ringen (3) schräge Verbindungsteile (17) verbunden sind, die durch die größte Innenausdehnung der Ringe verläuft, wobei eine Art von Schnecke gebildet ist, deren Schritt auf Höhe jedes nicht ganz geschlossenen Rings null beträgt, wobei durch die schrägen Verbindungsteile (17) die weitere Verbindung bis zum folgenden, nicht geschlossenen Ring (3) ermöglicht wird und der Abstand zwischen den aufeinanderfolgenden Ringen (3) dem Abstand entspricht, der für die Montage der Klammern (1) an dem Förderband vorgesehen ist.

9. Verbindungsvorrichtung nach einem der Ansprüche 1 bis 7, dadurch gekennzeichnet, daß die Ringe (3) in Form einer Abfolge von Ringen (3) gebildet sind, die nicht ganz geschlossen und miteinander durch bezüglich der Mittelebene der Abfolge von Ringen (3) allgemein parallele Verbindungsteile (16, 16') verbunden sind, die durch die größte Innenausdehnung der Ringe (3) verläuft, wobei eine Art von Mäander gebildet ist, und wobei die Wickelrichtung der nicht ganz geschlossenen Ringe (3) bezüglich der Wickelrichtung des vorhergehenden Rings umgekehrt ist, wobei die zu der Längsmittelebene allgemein parallelen Verbindungsteile abwechselnd näher am Zentrum des Rings (3) und dann weiter davon entfernt liegen, wobei sich der Teil, der eines der Enden eines Rings (3) mit dem allgemein bezüglich der Längsmittelebene parallelen Verbindungsteil (16) verbindet, und der Teil, der das andere Ende des Rings mit dem anderen, allgemein bezüglich der Längsmittelebene parallelen Verbindungsteil (16) über eine bestimmte Strecke überlappen und einander sehr naheliegen.

10. Verbindungsvorrichtung nach einem der vorhergehenden Ansprüche, dadurch gekennzeichnet, daß die Ringe (3) befestigt werden, indem sie in den konkaven Teil der Klammern (1) zwischen die hochgezogenen Ränder geklemmt werden, die ins Innere der Konkavität orientiert sind.

11. Verbindungsvorrichtung nach einem der vorhergehenden Ansprüche, dadurch gekennzeichnet, daß jeder Ring (3) an einem oder mehreren Punkten an den konkaven gekrümmten Teil der Klammer (1) geschweißt ist, in dem er angeordnet ist.

12. Verbindungsvorrichtung nach einem der vorhergehenden Ansprüche, dadurch gekennzeichnet, daß die Ringe (3) eine gestreckte Form aufweisen, da sie jeweils vorne und hinten einen Halbkreis aufweisen, die an ihren oberen und ihren unteren Enden durch geradlinige Teile oder durch gekrümmte Teile verbunden sind, die eine leichte Konkavität in Richtung des Inneren der Ringe aufweisen.

13. Verbindungsvorrichtung nach einem der vorhergehenden Ansprüche, dadurch gekennzeichnet, daß die Ringe (3) in den konkaven Teil der Klammern (1) eingerastet sind, wobei der konkave Teil der Klammern (1) eine Form aufweist, die sich über etwas mehr als 180° erstreckt, und die Ringe (3) eine entsprechende Steckform aufweisen, die die spätere Befestigung der Klammern (1) an dem Transportband (13) zuläßt.

14. Verbindungsvorrichtung nach einem der vorhergehenden Ansprüche, dadurch gekennzeichnet, daß die Verschleißfestigkeitseigenschaften des Materials der Ringe (3) besser als diejenigen des Materials sind, das die U-förmigen Klammern (1) bildet.

15. Verbindungsvorrichtung nach einem der vorhergehenden Ansprüche, dadurch gekennzeichnet, daß die Gleiteigenschaften des Materials der Ringe (3) besser als diejenigen des Materials sind, das die U-förmigen Klammern (1) bildet.

16. Verbindungsvorrichtung nach einem der vorhergehenden Ansprüche, dadurch gekennzeichnet, daß die Verschleißfestigkeitseigenschaften und die Gleiteigenschaften der Ringe (3) besser als diejenigen des Materials sind, das die U-förmigen Klammern (1) bildet.

17. Verbindungsvorrichtung nach einem der vorhergehenden Ansprüche, dadurch gekennzeichnet, daß an den hinteren Teilen der Ringe (3) ein Dichtungsband (8) befestigt ist, wobei das Dichtungsband (8) einen länglichen Teil (8') aufweist, der durch Ausschneiden und Formung oder durch Warmformung und Ausschneiden aus einem flachen, nachgiebigen Material hergestellt ist, dessen Profil allgemein der Krümmung des hinteren Teils des Rings (3) entspricht, an dem er befestigt werden soll, sowie Dichtungslamellen (9), die an den länglichen Teil (8') angesetzt sind, wobei sie ein einziges Teil damit bilden, und deren Fläche und Abstand der Fläche und dem Abstand der oberen bzw. der unteren Teile der Hohlräume entsprechen, die zwischen dem konvexen Teil der Klammern (1) einer Reihe und dem entgegengesetzten Ende des Förderbandes (13) sowie zwischen den Klammern (1) der anderen Reihe bestehen, die an dem entgegengesetzten Ende befestigt sind, wenn die Verbindung realisiert ist, wobei die Lamellen (9) bezüglich des länglichen Teils (8') wie die Zähne eines Rechens angeordnet sind.

18. Verbindungsvorrichtung nach Anspruch 17, dadurch gekennzeichnet, daß sich die Lamellen (9) in Form einer einzigen Reihe an der Seite des Dichtungsbandes (8) präsentieren, die im montierten Zustand nach außerhalb des Förderbandes(13) orientiert ist.

19. Verbindungsvorrichtung nach Anspruch 17, dadurch gekennzeichnet, daß sich die Lamellen (9) in Form von zwei bezüglich der Längssymmetrieebene symmetrischen Reihen präsentieren, die den länglichen Teil (8') des Dichtungsbandes (8) teilt.

20. Verbindungsvorrichtung nach Anspruch 17, 18 und 19, dadurch gekennzeichnet, daß der längliche Teil (8') des Dichtungsbandes eine Abfolge von Absätzen (8") aufweist, deren gegenseitiger Abstand demjenigen der Ringe (3) entspricht, wenn die Klammern (1) am Ende des Förderbandes (13) angebracht sind, wobei die Absätze in der gleichen Richtung wie die Dichtungslamellen (9) orientiert sind und eine Amplitude aufweisen, die der Dicke der Ringe (3) entspricht, wobei die Dichtungslamellen (9) in diesem Fall an den länglichen Teil (8') des Dichtungsbandes (8) durch einen gekrümmten Teil angesetzt sind, der bezüglich des länglichen Teils (8') des Dichtungsbandes wenigstens soviel wie die Dicke der Ringe nach hinten vorsteht.

21. Verbindungsvorrichtung nach Anspruch 17, 18 oder 19, dadurch gekennzeichnet, daß das Dichtungsband (8) an den Ringen (3) durch eine Schweißung befestigt ist, die gegen den hinteren Teil der Ringe (3) durchgeführt ist, wobei die aufeinanderfolgenden Dichtungslamellen (9) zwischen den aufeinanderfolgenden Ringen zentriert sind.

22. Verbindungsvorrichtung nach Anspruch 20, dadurch gekennzeichnet, daß das Dichtungsband (8) an den aufeinanderfolgenden, durchbrochenen Ringen (3) befestigt ist, wobei seine aufeinanderfolgenden Absätze (8") zwischen die überlappenden Enden (11, 11') der aufeinanderfolgenden Ringe geklemmt sind.

23. Verbindungsvorrichtung nach Anspruch 22, dadurch gekennzeichnet, daß die aufeinanderfolgenden Absätze des Dichtungsbandes, die zwischen die überlappenden Enden (11, 11') der aufeinanderfolgenden Ringe (3) geklemmt sind, außerdem mit diesen verschweißt sind.

24. Verbindungsvorrichtung nach Anspruch 20, dadurch gekennzeichnet, daß das Dichtungsband (8) an den aufeinanderfolgenden mäanderartigen Ringen (3) befestigt ist, die miteinander verbunden sind, wobei die aufeinanderfolgenden Absätze (8") zwischen die überlappenden Enden der aufeinanderfolgenden Verbindungsteile geklemmt sind.

25. Verbindungsvorrichtung nach Anspruch 24, dadurch gekennzeichnet, daß die aufeinanderfolgenden Absätze (8") des Dichtungsbandes (8), die zwischen die überlappenden Enden der aufeinanderfolgenden Verbindungsteile (16, 16') von miteinander verbundenen, mäanderartigen Ringen geklemmt sind, außerdem an diese geschweißt sind.

26. Verbindungsvorrichtung nach Anspruch 17, dadurch gekennzeichnet, daß das Dichtungsband (8) durch Verschweißung seines länglichen Teils an der Hinterseite des schrägen Verbindungsteils (17) befestigt ist, das die aufeinanderfolgenden, wenidelartigen Ringe verbindet, und zwar auf Höhe der oberen und unteren Paare von Lamellen (9).

27. Verbindungsvorrichtung nach einem der vorhergehenden Ansprüche, dadurch gekennzeichnet, daß wenigstens eine der Pratzen der Klammern (1) an ihrer zu dem Förderband orientierten Innenseite Erhöhungen (5") aufweist, deren allgemeine Richtung, geradlinig oder gekrümmt, bezüglich der Längsrichtung der Pratzen der Klammern und der Längsrichtung des Förderbandes schräg ist, wenn die Klammern daran befestigt sind.

28. Verbindungsvorrichtung nach Anspruch 27, dadurch gekennzeichnet, daß die Erhöhungen (5") durch sich kreuzende Verlängerungen der Erhöhungen (5') gebildet sind, die den Längsrillen entsprechen, in denen die Köpfe der Befestigungsstifte aufgenommen sind.

29. Verbindung, die mittels einer Verbindungsvorrichtung nach einem der vorhergehenden Ansprüche hergestellt ist, dadurch gekennzeichnet, daß die Reihen von Klammern (1) derart an den Enden des Förderbandes (13) angebracht sind, daß der hintere Teil der Ringe (3) jeder Reihe von Klammern in Anlage gegen den Stirnteil (14) des Endes des Förderbandes (13) anliegt, an dem er angebracht ist.

## Claims

1. Joining device for conveyor belt comprising two rows of generally U-shaped staples, fixed on the edge of each one of the ends of a conveyor belt (13) by means of simple or double points or rivets, the curved part of the U-shaped staple (1) projecting beyond the edges forming the ends of the conveyor belt, the concave parts of the U-shaped staples (1) forming a succession of eyelets bounded by the said concave parts of the staples and by the edge of the conveyor belt to which the staples are fixed, the staples of each one of the rows being placed between the staples of the other row, in such a way as the eyelets of the staples of the two rows are in alignment, in the transversal direction of the belt, a metallic rod (15) which forms a linking and hinging axis being threaded across these aligned eyelets, characterised by the fact that a ring (3) is fixed to the concave part of each one of the U-shaped staples, the metallic rod (15) which forms a linking and hinging axis being threaded across the said successive rings belonging alternately to the one and to the other row of staples (1).

2. Joining device according to claim 1, characterised by the fact that the concave part of the staple (1) has a profile complementary to that of the external periphery of the ring (3).

3. Joining device according to claims 1 and 2, characterised by the fact that the profile of the periphery of the ring (3) is flat, the concave part of the U-shaped staple (1) having a profile formed by a flat median part and by two parts forming raised rims oriented towards the internal part of the concavity and which frame the ring.

4. Joining device according to claims 1 and 2, characterised by the fact that the profile of the periphery of the ring (3) comprises one or several recesses in the peripherial direction, the concave part of the U-shaped staple (1) having a profile comprising one or several ribbed parts in the peripherial direction, of a shape complementary to that of the recesses of the ring periphery.

5. Joining device according to claims 1 and 2, characterised by the fact that the profile of the periphery of the ring (3) comprises one or several ribbed parts in the peripherial direction, the concave part of the U-shaped staple (1) having a profile comprising one or several recesses in the peripherial direction, of a shape complementary to that of the ribbed parts of the ring (3) periphery.

6. Joining device according to any one of the preceding claims, characterised by the fact that the ring (3) is a broken ring.

7. Joining device according to any one of the preceding claims, characterised by the fact that the ring (3) is a broken ring, the broken ring being formed in such a way as its ends overlap over a certain distance.

8. Joining device according to any one of the preceding claims, characterised by the fact that rings (3) are formed by a chain of rings (3) uncompletely closed connected together by linking parts (17) skewed with respect to the median plane of the chain of rings (3) passing through the largest internal dimension of the rings, thus forming a kind of helix the step of which is nil at the level of each uncompletely closed ring, the skewed linking parts (17) enabling to reach forward the next uncompletely closed ring (3), the spacing betwen the successive rings (3) coresponding to the spacing required for the fitting of the staples (1) on the conveyor belt.

9. Joining device according to any one of the claims 1 to 7, characterised by the fact that the rings (3) are formed by a chain of uncompletely closed rings (3) connected together by linking parts (16, 16') generally parallel to the median plane of the ring chain (3) passing through the largest dimension of the rings (3) forming a sort of winding, the coiling direction of the uncompletely closed rings (3) being reversed for each ring of the ring chain (3) with respect to the coiling direction of the preceding ring, the linking parts generally parallel to the median longitudinal plane of the ring chain being located alternately closer to the ring (3) center, then farther to this latter the part linking one of the ends of a ring (3) to the linking part (16) generally parallel to the longitudinal median plane and the part linking the other end of the said ring to the other linking part (16) generally parallel to the longitudinal median plane, overlapping over a certain distance and being very close to each other.

10. Joining device according to any one of the preceding claims, characterised by the fact that the rings (3) are fixed by pinching inside the concave part of the staples (1) between the raised rims oriented towards the internal part of the concavity.

11. Joining device according to any one of the preceding claims, characterised by the fact that each ring (3) is welded on one or several points to the curved concave part of the staple (1) in which it is located.

12. Joining device according to any one of the preceding claims, characterised by the fact that the rings (3) have an elongated shape since they comprise a front half-circle and a rear half-circle, linked at their upper ends and at their lower ends by rectilinear parts or by curved parts presenting a slight concavity directed towards the internal part of the rings.

13. Joining device according to any one of the preceding claims, characterised by the fact that the rings (3) are interlocked in the concave part of the staple (1), the said concave part of the staples (1) having a shape extending over slightly more than 180°, the rings (3) presenting a corresponding male form enabling the further fixation of the staples (1) against the conveyor belt (13).

14. Joining device according to any one of the preceding claims, characterised by the fact that the strength to wear properties of the ring (3) material are higher than those of the material out of which the U-shaped staples (1) are made.

15. Joining device according to any one of the preceding claims, characterised by the fact that the slippping properties of the ring (3) material are higher than those of the material out of which the U-shaped staples (1) are made.

16. Joining device according to any one of the preceding claims, characterised by the fact that the strength to wear properties and the slipping properties of the ring (3) material are higher than those of the material out of which the U-shaped staples (1) are made.

17. Joining device according to any one of the preceding claims, characterised by the fact that a tightness stripe (8) is fixed to the rear part of the rings (3), the said tightness stripe (8) comprising an elongated portion (8') made of a flat resilient material by cutting and forming or by thermosetting and forming, the profile of which corresponds generally to the curve of the rear part of the ring (3) on which it has to be fixed, as well as tightness blades (9) attached to said elongated portion (8') forming a single unit with this latter, the surface and the spacing of these blades corresponding respectively to the surface and to the spacing of the upper parts and of the lower parts of the gaps which are present between the convex part of the staples (1) belonging to one row, and the opposed end of the conveyor belt (13), and between the staples (1) belonging to the other row fixed to the said opposed end, when the junction is completed, the said blades (9) being arranged, with respect to the elongated portion (8') in the same way as the teeth of a rake.

18. Joining device according to claim 17, characterised by the fact that the blades (9) are arranged according to one single row, on the side of the tightness stripe (8) which once mounted is oriented towards the external part of the conveyor belt (13).

19. Joining device according to claim 17, characterised by the fact that the blades (9) are arranged according to two rows, symmetrical with respect to a longitudinal symmetry plane dividing the elongated portion (8') of the tightness stripe (8).

20. Joining device according to claims 17, 18 or 19, characterised by the fact that the elongated portion (8') of the tightness stripe presents a series of steps (8") mutually spaced by a distance corresponding to the spacing of the rings (3) when the staples (1) are mounted on the edge of the conveyor belt (13) the said steps being oriented in the same direction as that of the tightness blades (9) and having an amplitude corresponding to the thickness of the rings (3), the tightness blades (9) being in that case attached to the elongated portion (8') of the tightness stripe (8) by a curved portion projecting rearward, from the elongated portion (8') of the tightness stripe, by a distance, at least equal to the thickness of the rings.

21. Joining device according to claims 17, 18 or 19, characterised by the fact that the tighness stripe (8) is fixed to the rings (3) by a welding carried out against the rear part of the rings (3) the successive tightness blades (9) being centered between the successive rings.

22. Joining device according to claim 20, characterised by the fact that the thightness stripe (8) is fixed to the successive broken rings (3), its successive steps (8") being pinched between the overlapping ends (11, 11') of the successive rings.

23. Joining device according to claim 22, characterised by the fact that the successive steps of the thightness stripe which find themselves pinched between the overlapping ends (11, 11') of the successive rings (3) are furthermore welded to these latter.

24. Joining device according to claim 20, characterised by the fact that the tightness stripe (8) is fixed to the successive rings (3) of the winding type, which are connected together, the successive steps (8") being pinched between the overlapping ends of the successive linking parts.

25. Joining device according to claim 24, characterised by the fact that the successive steps (8") of the tightness stripe (8) which find themselves pinched between the overlapping ends of the successive linking parts (16, 16') of the winding type rings which are linked together, are furthermore welded to these latter.

26. Joining device according to claim 17, characterised by the fact that the tightness stripe (8) is fixed by welding its elongated part against the rear face of the skewed linking portion (17) connecting successive rings of the helical type, flush with the pairs of upper and lower blades (9).

27. Joining device according to any one of the preceding claims, characterised by the fact that at least one of the staple (1) lug comprises on its lower surface oriented towards the conveyor belt, ribs (5") ) the general direction of which, whether they are rectilinear or curved, is skewed with respect to the longitudinal direction of the staples lugs and to the longitudinal direction of the conveyor belt, when the staples are fixed to this latter.

28. Joining device according to claims 27, characterised by the fact that the ribs (5") are made up by the crossing extensions, the ribs (5') corresponding to the longitudinal grooves in which are received the fixing points heads.

29. Junction carried out by means of a joining device according to any one of the preceding claims, characterised by the fact that the staple (1) rows are mounted on the ends of the conveyor belt (13) in such a way as the rear parts of the rings (3) of each staple row are in abutment against the front part (14) of the conveyor belt (13) on which it is mounted.
